Europäisches Patentamt

European Patent Office

Office européen des brevets

(11) Veröffentlichungsnummer: **0 363 682**
**A2**

# EUROPÄISCHE PATENTANMELDUNG

(21) Anmeldenummer: **89117196.9**

(51) Int. Cl.⁵: **H04N 7/13**

(22) Anmeldetag: **18.09.89**

(30) Priorität: **11.10.88 DE 3834476**

(43) Veröffentlichungstag der Anmeldung:
**18.04.90 Patentblatt 90/16**

(84) Benannte Vertragsstaaten:
**AT CH DE ES FR GB IT LI SE**

(71) Anmelder: **ROBERT BOSCH GMBH**
**Postfach 10 60 50**
**D-7000 Stuttgart 10(DE)**

(72) Erfinder: **Amor, Hamed, Dr.**
**Bischof Gerhard Strasse 30**
**D-3200 Hildesheim(DE)**
Erfinder: **Biere, Dietmar, Dr.**
**Magdalenenweg 27**
**D-3200 Hildesheim(DE)**
Erfinder: **Tescher, Andrew, Dr.**
**14670 Fieldstone Drive**
**Saratoga, CA 95070(US)**

(74) Vertreter: **Eilers, Norbert, Dipl.-Phys.**
**Blaupunkt-Werke GmbH**
**Robert-Bosch-Strasse 200**
**D-3200 Hildesheim(DE)**

(54) **Einrichtung zur Codierung eines Videosignals.**

(57) Bei einer Einrichtung zur Codierung eines Videosignals, insbesondere nach dem DPCM-Verfahren,
wobei eine Quantisierung mit steuerbarer Kennlinie
erfolgt und das quantisierte Signal über einen Pufferspeicher geleitet wird und wobei ferner bei Änderungen des Videosignals, die unterhalb eines Schwellwertes liegen, keine quantisierten Signale erzeugt
werden, werden in Abhängigkeit vom Füllstand des
Pufferspeichers der Schwellwert und die Quantisierungskennlinie gesteuert.

EP 0 363 682 A2

## Einrichtung zur Codierung eines Videosignals

Die Erfindung geht aus von einer Einrichtung zur Codierung eines Videosignals, insbesondere nach dem DPCM-Verfahren, nach der Gattung des Hauptanspruchs.

Bei der datenreduzierenden Codierung von Videosignalen fallen die zu übertragenden Daten ungleichförmig an. So werden beispielsweise zur Übertragung eines detailreichen Bildausschnitts wesentlich mehr Daten benötigt, als für einen großflächigen Bildausschnitt. Bei der sogenannten Interframe-Codierung ist die Datenmenge, welche je Zeiteinheit anfällt, außerdem vom Vorliegen von Bewegung abhängig.

Zur höchstmöglichen Ausnutzung des Übertragungskanals ist jedoch bei der Übertragung eine Datenrate erforderlich, die der Kanalkapazität entspricht - also konstant ist.

Bei bekannten Schmalband-Bildübertragungseinrichtungen ist daher ein Pufferspeicher vorgesehen, mit dessen Hilfe ein ungleichförmiger Datenstrom in einen gleichförmigen Datenstrom umgewandelt wird. Um ein Überlaufen oder ein Leerlaufen des Pufferspeichers zu vermeiden, wird bei den bekannten Einrichtungen die Quantisierung nach dem Füllstand des Pufferspeichers gesteuert.

Aufgabe der vorliegenden Erfindung ist es, eine Einrichtung zur Codierung eines Videosignals insbesondere nach dem DPCM-Verfahren anzugeben, bei welchem eine Steuerung der Codierung in Abhängigkeit vom Füllstand des Pufferspeichers eine möglichst hohe Übertragungsqualität gewährleistet. Die erfindungsgemäße Einrichtung mit den kennzeichnenden Merkmalen des Hauptanspruchs hat den Vorteil, daß die Datenreduktionsrate in einem weiten Bereich an die Eigenschaften des jeweils zu übertragenden Bildes angepaßt werden kann.

Obwohl die Erfindung in erster Linie zur gemeinsamen Anwendung mit DPCM-Verfahren vorgesehen ist, eignet sie sich auch zusammen mit anderen Codierverfahren. Die Anwendung im Zusammenhang mit DPCM-Verfahren ist sowohl bei einer Interframe- als auch bei einer Intraframe-Codierung möglich.

Durch die in den Unteransprüchen aufgeführten Maßnahmen sind vorteilhafte Weiterbildungen und Verbesserungen der im Hauptanspruch angegebenen Erfindung möglich.

Einige der Weiterbildungen und Verbesserungen beziehen sich auf die Anwendung der erfindungsgemäßen Einrichtung im Zusammenhang mit einer Intraframe-DPCM, einer diskreten Cosinustransformation sowie einer Bewegungskompensation bei der DPCM. Die erfindungsgemäße Einrichtung als solche und andere Weiterbildungen sind jedoch nicht auf diese Codierungen beschränkt.

Insbesondere wird bei einer Weiterbildung der Erfindung in einem unteren Bereich des Füllstandes der Schwellwert auf einem Mindestwert gehalten und die Quantisierungskennlinie mit zunehmendem Füllstand gröber, während in einem oberen Bereich des Füllstandes bei grober Quantisierungskennlinie der Schwellwert mit zunehmendem Füllstand ansteigt.

Hierdurch wird erreicht, daß auch bei hohem Datenanfall möglichst viele Bereiche des Bildes übertragen werden - allerdings mit weniger guter Auflösung. Erst bei einem Datenanfall, bei welchem der Speicher möglicherweise überläuft, werden nur noch diejenigen Bildbereiche übertragen, deren Inhalt stark von dem Bereich des vorangegangenen Bildes abweicht.

Ein Ausführungsbeispiel der Erfindung ist in der Zeichnung anhand mehrerer Figuren dargestellt und in der nachfolgenden Beschreibung näher erläutert. Es zeigt:

Fig. 1 ein Blockschaltbild einer Schmalband-Bildübertragungseinrichtung,

Fig. 2 ein Diagramm zur Darstellung der Abhängigkeit des Schwellwertes und der Quantisierungskennlinie vom Füllstand des Pufferspeichers und

Fig. 3 ein weiteres Diagramm zur Erläuterung der Abhängigkeit der Quantisierungskennlinie vom Füllstand des Pufferspeichers.

Fig. 4 als Blockschaltbild Teile eines Empfängers zur Erläuterung einer Weiterbildung der Erfindung.

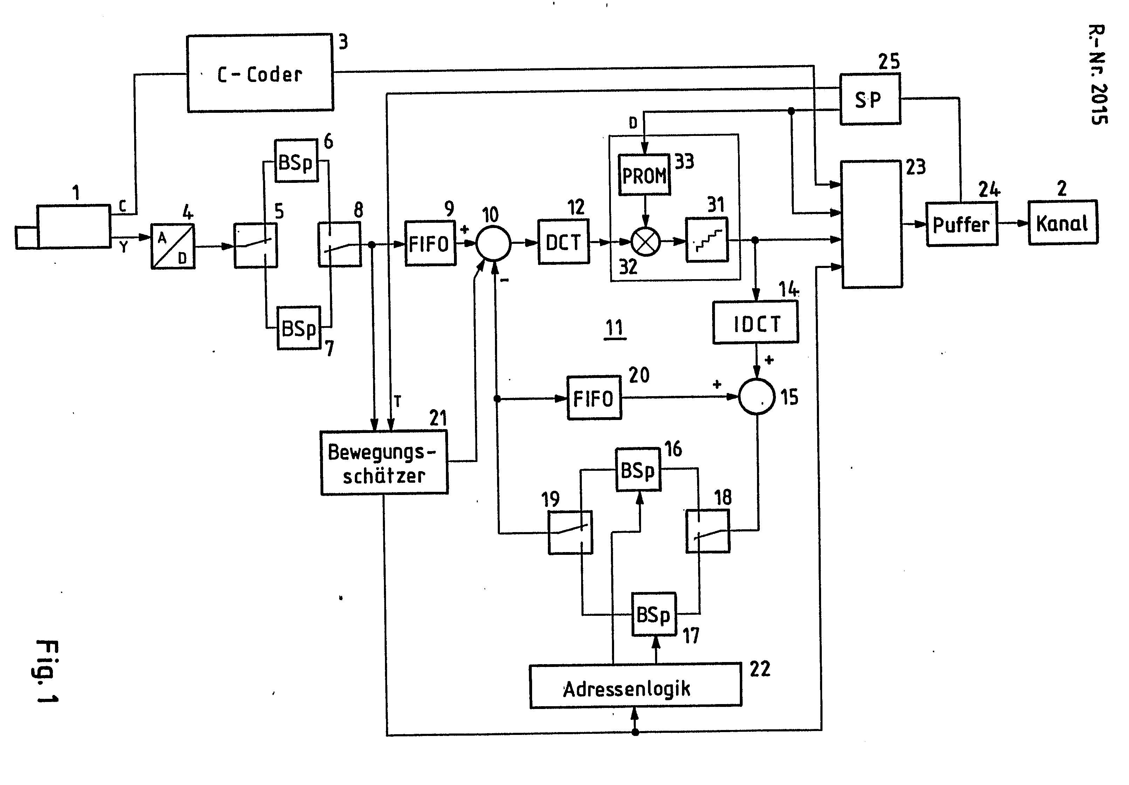

Die in Fig. 1 dargestellte Schaltungsanordnung stellt eine Sendeeinrichtung für ein Schmalband-Bildtelefon dar, wobei die Ausgangssignale einer Videokamera 1 analog/digital-gewandelt und anschließend unter Anwendung datenreduzierender Verfahren derart codiert werden, daß sie über einen schmalbandigen Kanal 2 zu einem Empfänger übertragen werden können. Die im Zusammenhang mit der Schaltungsanordnung nach Fig. 1 genannten Zahlenangaben beziehen sich auf die sogenannte CIF-Auflösung von 360 x 288 Bildelementen für den Luminanzanteil und von jeweils 180 x 144 Bildelementen für die Chrominanzanteile U, V. Die Kapazität des Übertragungskanals 2 beträgt 64000 Bit/s.

Zur Reduzierung des Datenstroms tragen im wesentlichen die folgenden bekannten Verfahren bei: Reduzierung der Bewegungsauflösung (es wird nur jedes dritte Bild übertragen), DPCM (Interframe), diskrete Cosinus-Transformation (DCT), adaptive Quantisierung und Entropie-Codierung. Ferner ist eine Umschaltung auf eine Intraframe-DPCM vorgesehen.

Die Codierung des Luminanzsignals wird im folgenden anhand einzelner Funktionseinheiten erläutert, während die Codierung der Chrominanzsignale U, V nur durch eine Funktionseinheit 3 dargestellt ist, da diese Codierung in ähnlicher Weise wie die Codierung des Luminanzsignals Y erfolgt.

Die Ausgangssignale des Analog/Digital-Wandlers 4 werden über einen Umschalter 5 bildweise abwechselnd in einen von zwei Bildspeichern 6, 7 eingeschrieben. Durch entsprechende Steuerung eines weiteren Umschalters 8 sowie im einzelnen nicht dargestellte Adressierung beim Auslesen wird jedes dritte Bild aus den Speichern 6, 7 ausgelesen, so daß sich bereits eine Datenreduktion um den Faktor 3 ergibt.

Nach einer Zwischenspeicherung zur Zeitanpassung in einem FIFO-Speicher 9 gelangen die Signale zu einer Subtraktionsschaltung 10, welche Teil einer Prädiktionsschleife 11 ist. In einer Schaltung 12 zur diskreten Cosinus-Transformation werden die Ausgangssignale der Subtraktionsschaltung - also meistens die Differenzen zwischen dem jeweils von der Kamera erzeugten Signal und dem Signal eines gespeicherten Bildes - blockweise transformiert. Zu einem Block gehören jeweils n Bildelemente aus n aufeinanderfolgenden Zeilen, die eine Teilfläche des Bildes von n x n Bildelementen darstellen. Meistens werden Blöcke der Größe 8 x 8 Bildelemente vorgeschlagen. Bei der Realisierung der Erfindung haben sich für die Luminanz Blöcke von 16 x 16 Bildelementen und für die Chrominanz jeweils 8 x 8 Bildelemente große Blöcke als günstig herausgestellt.

Da die diskrete Cosinus-Transformation an sich bekannt ist (siehe Ahmed N., Natarajan T. und Rao R.: Discrete Cosine Transform, IEEE Transactions C-23 (1974), Seiten 90 bis 93), sei im folgenden nur kurz erwähnt, daß durch die diskrete Cosinus-Transformation jeweils für einen Block aus n x n Bildelementen Koeffizienten ermittelt werden, welche dem Gleichanteil des Signals (also der mittleren Helligkeit), der Amplitude einer Grundwelle, deren Periode der doppelten Blocklänge entspricht, und den Amplituden der Oberwellen entsprechen. Je nach Bildinhalt nimmt die Amplitude der Oberwellen mit der Ordnungszahl der jeweiligen Oberwelle mehr oder weniger stark ab, so daß für einen großen Anteil der Blöcke nur der Gleichanteil, die Grundwelle und/oder wenige Oberwellen zu übertragen sind.

Die Ausgangssignale der Schaltung 12 werden einem steuerbaren Quantisierer 13 zugeführt, der in Abhängigkeit von einem zugeführten Steuersignal eine gröbere oder feinere Quantisierung vornehmen kann. Die quantisierten Signale werden dann innerhalb der Prädiktionsschleife 11 einer Schaltung 14 zur inversen diskreten Cosinus-Transformation zugeleitet und über eine Addierschaltung 15 in weitere Bildspeicher 16, 17 eingelesen. Die Bildspeicher 16, 17 stellen einen Prädiktionsspeicher dar. Es werden zwei Bildspeicher verwendet, um ein Lesen zu ermöglichen, während neue Signale eingeschrieben werden. Dazu werden die Umschalter 18, 19 entsprechend gesteuert. Die aus dem Prädiktionsspeicher 16, 17 ausgelesenen Signale gelangen zur Subtraktionsschaltung 10 und über einen zur Zeitanpassung dienenden FIFO-Speicher 20 zur Addierschaltung 15.

Um eine genauere Prädiktion auch bei bewegten Bildern zu erhalten, ist ein Bewegungsschätzer 21 vorgesehen, der durch Vergleich aufeinanderfolgender Bilder jeweils für einen Block einen Bewegungsvektor erzeugt. Dazu können dem Bewegungsschätzer 21 - wie in Fig. 1 dargestellt - entsprechende Signale aus den Bildspeichern 6 und 7 zugeführt werden. Es können jedoch auch einerseits die zu übertragenden Signale und andererseits Signale aus dem Prädiktionsspeicher 16, 17 zugeleitet werden. Die Bewegungsvektoren werden einer Adressierlogik 22 zugeführt, so daß beim blockweisen Lesen der Signale aus dem Prädiktionsspeicher 16, 17 bereits eine durch Bewegung verursachte Verschiebung des Inhalts des jeweiligen Blocks zwischen dem gespeicherten und dem jeweils aktuellen Bild berücksichtigt wird.

Die Ausgangssignale des Quantisierers 13, des Coders 3 für die Chrominanzsignale U, V sowie die Ausgangssignale des Bewegungsschätzers 21 werden einem Entropie-Coder 23 zugeführt, bei welchem eingehende Codewörter entsprechend der Häufigkeit ihres Auftretens in kürzere bzw. längere ausgehende Codewörter gewandelt werden.

Da die durch die Codierung entstehenden Daten je nach Auftreten von Bewegung und Details im aufgenommenen Bild unregelmäßig anfallen, ist ein Pufferspeicher 24 vor der Übertragungsstrecke 2 vorgesehen, der beispielsweise die Kapazität eines Bildes aufweist.

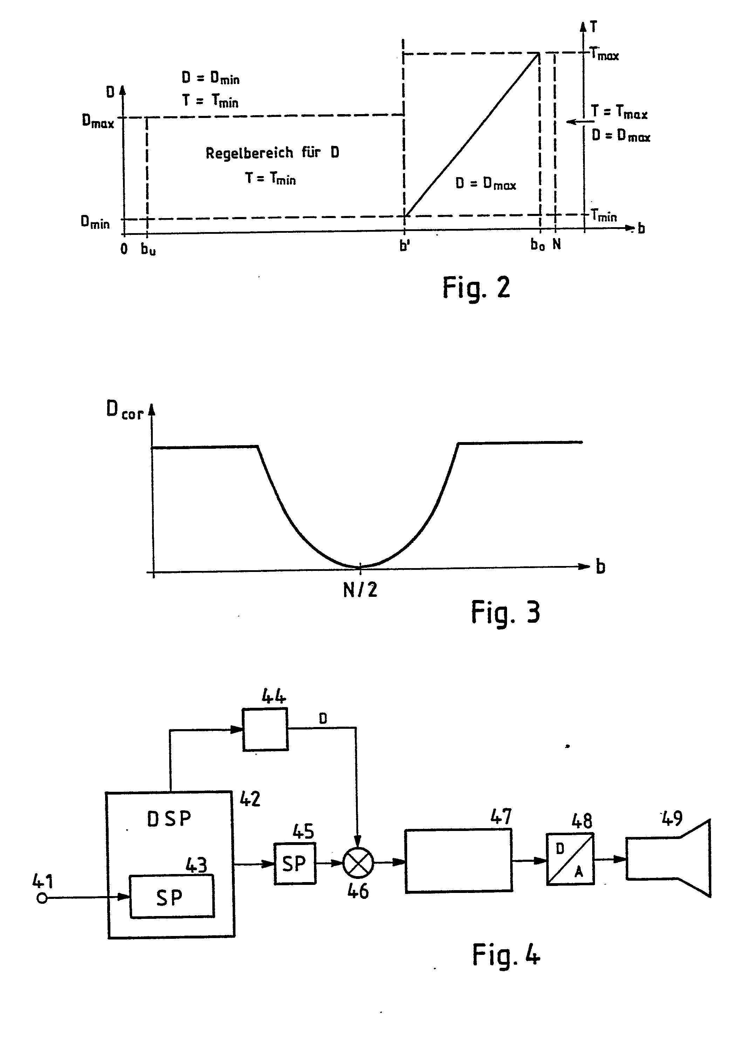

Zur Steuerung des Schwellwertes und der Quantisierungskennlinie wird vom Pufferspeicher 24 ein Signal abgenommen, das dem Füllstand entspricht. Dieses kann beispielsweise in der Differenz zwischen den Einschreib- und Ausleseadressen bei der Verwendung eines Schreib/Lese-Speichers (RAM) sein. Ist diese Differenz gleich 0, ist der Speicher leer, während eine der Puffergröße entsprechende Differenz einen gefüllten Speicher bedeutet. Dieses Signal wird einem Signalprozessor 25 zugeleitet, der nach Algorithmen, die im Zusammenhang mit den Figuren 2 und 3 beschrieben werden, die Signale T für den Schwellwert und D zur Steuerung der Quantisierungskennlinie ableitet. Das Signal T wird dem Bewegungsschätzer 21 zugeführt, in welchem zur Abschätzung von im Bild vorliegenden Bewegungen Veränderungen in jeweils einem Block gegenüber einem vergleichbaren Block eines vorangegangenen Bildes ermittelt werden. Als Maß für die Veränderungen kann die Summe der absoluten Differenzen zum Mittelwert im jeweiligen Block gewonnen werden. Dieses ist relativ einfach zu berechnen, was zu einer Verringerung des technischen Aufwandes für eine erfindungsgemäße Einrichtung beiträgt.

Alternativ kann jedoch auch die Varianz im Block als Maß der Veränderungen im Block berechnet werden, was zwar aufwendiger ist, jedoch eine bessere Beschreibung der Strukturhaltigkeit ergibt. Gegebenenfalls kann auch die Leistung im Block als Maß für die Veränderungen dienen. Sind diese Veränderungen sehr gering, so wird davon ausgegangen, daß sich keine Veränderung zum vorangegangenen Bild ergeben hat und eine Codierung der derzeitigen Blocks nicht erforderlich ist. Für einen solchen Block wird daher vom Bewegungsschätzer 21 der Subtrahierschaltung 10 ein Signal zugeleitet, welches dazu führt, daß lediglich das Signal in der DPCM-Schleife 11 umläuft.

Die Größe der Differenz bzw. das Maß von Änderungen, welche eine Codierung des jeweiligen Blocks verhindert, wird dem Bewegungsschätzer 21 als Schwellwert T zugeführt. Ist der Schwellwert T groß, so werden nur diejenigen Blöcke codiert, deren Inhalt stark vom vergleichbaren Block des vorangegangenen Bildes abweicht. Bei kleinem T erfolgt eine Codierung bereits bei geringen Abweichungen.

Das Signal D stellt einen Skalierungsfaktor dar und bewirkt eine feinere oder gröbere Kennlinie des Quantisierers 13. Im Quantisierer 13 ist eine Quantisierungsschaltung 31 vorgesehen, welche eine Kennlinie mit der feinsten Abstufung aufweist, die bei der erfindungsgemäßen Einrichtung benutzt werden soll. Dieser Quantisierungsschaltung 31 ist eine Multiplizierschaltung 32 vorgeschaltet, mit welcher die Ausgangssignale der Schaltung 12 zur diskreten Cosinus-Transformation mit dem Kehrwert von D multipliziert werden. Der Kehrwert wird in einem Nur-Lesespeicher 33 gebildet. Bei kleinem D wird dann der gesamte Aussteuerbereich der Quantisierungsschaltung 31 ausgenutzt, so daß eine feine Quantisierung entsteht, während bei größerem D die Amplitude der der Quantisierungsschaltung 31 zugeführten Signale kleiner ist und nur ein Teilbereich der Kennlinie ausgenutzt wird. Um eine entsprechende Decodierung vornehmen zu können, muß der Skalierungsfaktor auch im Empfänger wirksam sein, so z. B. dadurch, daß er zusammen mit den Nutzsignalen übertragen wird, wozu das Signal D dem Entropie-Coder 23 zugeführt wird.

Im folgenden wird anhand von Fig. 2 die Abhängigkeit der Signale D und T vom Füllstand b des Pufferspeichers 24 (Fig. 1) erläutert. Dazu ist auf der waagrechten Achse der Fig. 2 der Füllstand von 0 (leerer Speicher) bis zum Maximalwert N (voller Speicher) dargestellt. Dabei sind $b_u$ und $b_o$ jeweils die untere und die obere Grenze des Regelbereichs. In einem unteren Teil des Regelbereichs zwischen $b_u$ und $b'$ ist T gleich $T_{min}$, während die Quantisierungskennlinie über das Signal D geregelt wird. Da in diesem Fall eine dynamische Regelung vorgesehen ist, stellt Fig. 2 keine einzelne Kurve, sondern lediglich ein Feld dar, in welchem sich D zwischen $D_{min}$ und $D_{max}$ bewegt. Unterhalb der unteren Grenze $b_u$ des Regelbereichs sind sowohl D als auch T auf ihren Minimalwerten, so daß zur Sicherstellung eines kontinuierlichen Bitstroms im Übertragungskanal 2 Stopfbits hinzuzufügen sind, wenn der Füllstand weiter absinken sollte.

Im oberen Teil des Regelbereichs zwischen $b'$ und $b_o$ weist D seinen Maximalwert $D_{max}$ auf, während T vom Minimalwert $T_{min}$ zum Maximalwert $T_{max}$ ansteigt. An der oberen Grenze $b_o$ des Regelbereichs sind beide Maximalwerte erreicht. Falls dann der Füllstand weiter steigen sollte, ist eine Unterbrechung der Übertragung von Daten zum Pufferspeicher 24 (Fig. 1) erforderlich.

Im Regelbereich für D wird aus dem Füllstand b das Signal D mit Hilfe folgender Gleichung berechnet:

$$D_i = D_{i-1} - D_{cor}(b_i) + c \cdot D_{cor}(b_{i-1})$$

Dabei ist:

$D_i$ der oben beschriebene Skalierungsfaktor für den i-ten Block,

$D_{i-1}$ der Skalierungsfaktor für den (i-1)sten Block

$b_i$ der Füllstand zum i-ten Block,

$b_{i-1}$ der Füllstand zum (i-1)sten Block,

c ein Parameter und

$D_{cor}$ eine Funktion, die bei einem mittleren Füllstand ein Minimum aufweist und für größere und kleinere Füllstände ansteigt.

Der prinzipielle Verlauf der Funktion $D_{cor}$ in Abhängigkeit von b ist in Fig. 3 dargestellt. Von einem mittleren Füllstand, bei welchem praktisch keine zusätzliche Beeinflussung der dem Pufferspeicher zugeführten Datenmenge erforderlich ist, steigt $D_{cor}$ zunächst nur allmählich an, um bei größeren Abweichungen (vom mittleren Stand) steiler zu werden, da hier eine schnellere Reaktion erfoderlich ist. Ab einer bestimmten Abweichung erreicht $D_{cor}$ einen Maximalwert, auf den es dann begrenzt wird. Die Funktion $D_{cor}$ kann in Form einer Tabelle in einem Speicher abgelegt sein, wodurch eine wiederholte Berechnung für die jeweiligen Werte von b erspart wird.

Wie im Zusammenhang mit Fig. 1 bereits erwähnt, kann der Skalierungsfaktor D zusammen mit den Nutzsignalen übertragen werden. Es ist jedoch auch möglich, im Empfänger den Skalierungsfaktor D aus dem Füllstand eines Pufferspeichers, der am Eingang eines Empfängers angeordnet ist, zu berechnen. Fig. 4 dient zur Erläuterung dieser Weiterbildung der Erfindung, wozu lediglich die dazu notwendigen Teile eines Empfängers dargestellt sind.

Über einen Eingang 41 werden die übertragenen Signale einem an sich bekannten digitalen Signalprozessor 42 zugeführt, der über einen internen Speicher 43 verfügt. Dieser interne Speicher 43 wandelt den ankommenden gleichförmigen Datenfluß in einen jeweils den Erfordernissen der nachfolgenden Decodierung angepaßten ungleichförmigen Datenfluß um. Der Skalierungsfaktor D kann mit Hilfe des digitalen Signalprozessors 42 aus den ankommenden Signalen separiert werden, wenn er mit diesen übertragen wird. Um eine bessere Ausnutzung des Übertragungskanals zu erzielen, kann jedoch der Skalierungsfaktor D auch aus dem Füllstand des internen Speichers 43 ermittelt werden, wozu im digitalen Signalprozessor 42 ein entsprechendes Programm vorgesehen ist. Falls jedoch die Rechenkapazität des digitalen Signalprozessors bereits durch anderweitige Programme ausgeschöpft sein sollte, kann der Skalierungsfaktor D auch mit Hilfe einer weiteren geeigneten Rechenschaltung 44 aus dem Füllstand ermittelt werden.

Die Nutzsignale werden vom digitalen Signalprozessor 42 über einen Zwischenspeicher 45 an eine Multiplizierschaltung 46 gegeben, welcher auch der Skalierungsfaktor D zugeführt wird. Die mit Hilfe der Multiplizierschaltung 32 (Fig. 1) durchgeführte Skalierung wird somit rückgängig gemacht. In einer anschließenden Schaltung 47 erfolgen weitere Schritte zur Decodierung der empfangenen Signale. Die somit erzeugten digitalen Videosignale werden über einen Digital/Analog-Wandler 48 einer als Bildröhre dargestellten Wiedergabeeinrichtung 49 zugeführt.

**Ansprüche**

1. Einrichtung zur Codierung eines Videosignals, insbesondere nach dem DPCM-Verfahren, wobei eine Quantisierung mit steuerbarer Kennlinie erfolgt und das quantisierte Signal über einen Pufferspeicher geleitet wird und wobei ferner bei Änderungen des Videosignals, die unterhalb eines Schwellwertes liegen, keine quantisierten Signale erzeugt werden, dadurch gekennzeichnet, daß in Abhängigkeit vom Füllstand des Pufferspeichers der Schwellwert und die Quantisierungskennlinie gesteuert werden.

2. Einrichtung nach Anspruch 1, dadurch gekennzeichnet, daß in einem unteren Bereich des Füllstandes der Schwellwert auf einem Mindestwert gehalten wird und die Quantisierungskennlinie mit zunehmenden Füllstand gröber wird und daß in einem oberen Bereich des Füllstandes bei grober Quantisierungskennlinie der Schwellwert mit zunehmendem Füllstand ansteigt.

3. Einrichtung nach Anspruch 2, wobei eine blockweise diskrete Cosinus-Transformation vorgesehen ist, bei welcher für jeweils einen Block aus nxn Bildelementen ein Gleichspannungskoeffizient, und mehrere Wechselspannungskoeffizienten abgeleitet und quantisiert werden, dadurch gekennzeichnet, daß die Quantisierungskennlinie der Wechselspannungskoeffizienten in Abhängigkeit vom Füllstand gesteuert wird.

4. Einrichtung nach Anspruch 3, dadurch gekennzeichnet, daß Änderungen von Bild zu Bild erfaßt werden und eine DPCM-Codierung nur durchgeführt wird, wenn die Änderungen den Schwellwert nicht unterschreiten.

5. Einrichtung nach Anspruch 2, dadurch gekennzeichnet, daß eine Vergröberung der Quantisierungskennlinie im oberen Bereich des Füllstandes nach der Gleichung

$$D_i = D_{i-1} - D_{cor}(b_i) + c \cdot D_{cor}(b_{i-1})$$

berechnet wird, wobei

$D_i$ der oben beschriebene Skalierungsfaktor für den i-ten Block,

$D_{i-1}$ der Skalierungsfaktor für den (i-1)sten Block,

$b_i$ der Füllstand zum i-ten Block,

$b_{i-1}$ der Füllstand zum (i-1)sten Block,

c ein Parameter und

$D_{cor}$ eine Funktion ist, die bei einem mittleren Füllstand ein Minimum aufweist, für größere und kleinere Füllstände ansteigt, und vorzugsweise einer in einem Speicher abgelegten Tabelle entnehmbar ist.

6. Einrichtung nach Anspruch 5, dadurch gekennzeichnet, daß $D_{cor}$ durch eine Funktion angenähert ist, welche von einem mittleren Füllstand ausgehend quadratisch ansteigt und außerhalb des mittleren Bereichs konstant bleibt.

7. Einrichtung zur Übertragung eines Videosignals nach dem DPCM-Verfahren, wobei senderseitig innerhalb einer Prädiktorschleife eine Quantisierung mit steuerbarer Kennlinie erfolgt und daß quantisierte Signal über einen Pufferspeicher und einen Übertragungskanal zu einem Empfänger geleitet wird, in welchem ein DPCM-Decoder vorgesehen ist, dadurch gekennzeichnet, daß senderseitig und im Empfänger jeweils ein Pufferspeicher angeordnet ist, daß in Abhängigkeit vom Füllstand des senderseitigen Pufferspeichers die Quantisierungskennlinie und in Abhängigkeit vom empfängerseitigen Pufferspeicher die Kennlinie der Decodiereinrichtung gesteuert wird.

8. Einrichtung nach einem der Ansprüche 1 bis 6, dadurch gekennzeichnet, daß die quatisierten Signale vom Pufferspeicher über einen Übertragungskanal einem Empfänger zuführbar sind, daß im Empfänger ein DPCM-Decoder mit steuerbarer Kennlinie vorgesehen ist und daß ferner zum Empfänger Signale, welche den Füllstand des Pufferspeichers darstellen, vorzugsweise mit einer Amplitudenauflösung von 5 bis 9 Bit, übertragen werden.

9. Einrichtung nach einem der vorhergehenden Ansprüche, dadurch gekennzeichnet, daß ein Bewegungsschätzer vorgesehen ist, in welchem Inhalte von Bildern verschiedener Bewegungsphasen miteinander verglichen werden, und daß dem Bewegungsschätzer der Schwellwert (T) zuführbar ist.

10. Einrichtung nach Anspruch 9, dadurch gekennzeichnet, daß dem Bewegungsschätzer einerseits die zu übertragenden Videosignale und andererseits Signale aus einem Prädiktionsspeicher zuführbar sind und daß deren Differenz mit dem Schwellwert (T) verglichen wird.

11. Einrichtung nach einem der vorhergehenden Ansprüche, wobei eine blockweise diskrete Cosinustransformation vorgesehen ist, dadurch gekennzeichnet, daß ein Maß für Veränderungen in jeweils einem Block abgeleitet und mit dem Schwellwert verglichen wird und daß als Maß für die Veränderungen die Summe der absoluten Differenzen zum Mittelwert im Block gewonnen wird.

12. Einrichtung nach einem der vorhergehenden Ansprüche, wobei eine blockweise diskrete Cosinustransformation vorgesehen ist, dadurch gekennzeichnet, daß ein Maß für Veränderungen in jeweils einem Block abgeleitet und mit dem Schwellwert verglichen wird und daß die Varianz im Block das Maß der Veränderungen im Block ist.

R.- Nr. 2015

Fig. 1

R.- Nr. 2015

Fig. 2

Fig. 3

Fig. 4